Europäisches Patentamt

European Patent Office

Office européen des brevets

(11) Publication number: 0 377 964
A1

# EUROPEAN PATENT APPLICATION

(21) Application number: 89312726.6

(22) Date of filing: 06.12.89

(51) Int. Cl.5: A21C 3/02, A21C 9/08

(30) Priority: 10.12.88 GB 8828904

(43) Date of publication of application:
18.07.90 Bulletin 90/29

(84) Designated Contracting States:
AT BE CH DE ES FR GB GR IT LI LU NL SE

(71) Applicant: TWEEDY OF BURNLEY LIMITED
Peel Mill Gannow Lane
Burnley BB12 6JL Lancashire(GB)

(72) Inventor: Gregory, David
11 Stirling Court Briercliffe
Burnley Lancashire(GB)

(74) Representative: Sherrard-Smith, Hugh et al
Appleyard, Lees & Co. 15 Clare Road
Halifax, HX1 2HY West Yorkshire(GB)

(54) A method of and apparatus for handling farinaceous material.

(57) Dough pieces enter a supply station (12) between a pair of spaced-opposed guide rollers (18) and then through three sets of opposed rollers (20), (22) and (24). The rollers (20), (22) and (24) flatten the dough piece to form a disc (26) of dough, which disc (26) exits from the lowermost rollers (24) and co-operates with a deflector (28) which alters the direction of travel of the disc (26) from the direction (30) in which is travels through the rollers to the direction (32).

The disc (26) is then rolled up by a sheet of chain (34) before passing into a tin (40) for baking. The cell structure of the dough is elongated by the rollers (20), (22) and (24) in a direction perpendicular to the direction (30) whereby, when the baked loaf is eventually sliced, cuts are made parallel to the elongate extent of the ovular cell structure.

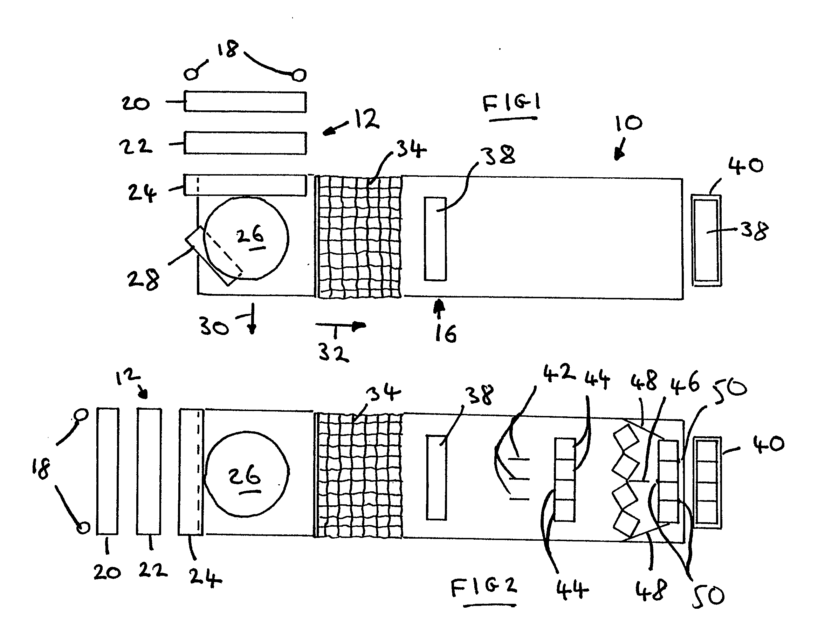

A supply station (12) can be moved from the position shown in Figure 1 to that shown in Figure 2 by moving the station first transversely and then pivotally such that the disc (26) leaving the rollers (20), (22) and (24) will already be travelling in the direction (32) along the handling station. The disc (28) is then rolled by the chain (34) and the roll (38) formed thereby passes through three knives (42) to form four generally equally-sized pieces (44) each of which are then pivoted through 90° before passing into a tin (40). The elongate cell structure of the dough is again aligned with the line of slices which are made subsequently to the baked loaf.

FIG.1

# A METHOD OF AND APPARATUS FOR HANDLING FARINACEOUS MATERIAL.

The present invention relates to farinaceous material handling apparatus and to a method of handling farinaceous material and is particularly, although not exclusively concerned with moulder panners.

In a known moulder panner in the United Kingdom dough is supplied to a series of squeezer rollers which alter the shape of the dough to be generally disc shaped with the dough cell structure being generally oval with the larger dimension of the ovals lying parallel to the longitudinal axis of the rollers. The dough then passes through a working station which rolls the dough up and passes the roll past three cutters which divide the roll into four pieces which are still just connected at an outer peripheral portion. The four pieces are then turned through 90° with adjacent pieces turning in opposite senses such that the smaller dimension of the ovals of the cell structure are located perpendicular to the direction of travel. The dough is then placed in a baking pan and when the dough is later cut to form sliced bread and the cuts are made along or parallel to the longitudinal axis of the oval cell structure. The shape of the cut cell is generally oval and shallow which makes the bread appear whiter as a result of the reflection of the light than would be the case if the cuts were made in line with the latitudinal axis of the cell structure.

In the United States a known moulded panner does not cut the rolled dough before it is located in a tin and accordingly the roll is not turned through 90° before being located in a tin. Thus the squeezer rollers are located to one side of the region where the dough is rolled and the dough leaves the rollers in a direction perpendicular to the direction in which it travels to be rolled. Accordingly the cell structure of the dough in the tin has the latitudinal axis of the oval extending transversely to the line of cuts made to form sliced bread to again give the appearance of the bread being whiter.

However with each of the moulder panners it is not possible to obtain the enhanced white effect regardless of whether the dough is turned or not, and the enhanced white effect can only be gained either by turning the dough or by not turning the dough depending on the type of machine.

According to one aspect of the present invention, farinaceous material handling apparatus includes a farinaceous material supply station arranged to supply farinaceous material to a working station. The supply station being movable relative to the working station between at least two angular positions. With such an apparatus, farinaceous material may be able to be supplied to the working station from a selected relative angular direction.

The supply station may be movable relative to the working station between three angular positions.

The supply station may be able to supply farinaceous material from a direction in line with the intended direction of travel of the farinaceous material through the working station or from a direction transverse thereto, which direction may be generally perpendicular to the intended direction of travel of the farinaceous material through the working station.

Alternatively or additionally the supply station may be able to supply farinaceous material to the working station from two different directions each of which is transverse to the intended direction of travel of the farinaceous material through the working station, which two directions may be opposed to each other and each of which may be generally perpendicular to the intended direction of travel of the farinaceous material through the working station.

The supply station may be pivotally movable relative to the working station. The supply station may be translationally movable relative to the working station.

The supply station may include means for reducing the thickness of, or means for exerting a pressure on a piece of farinaceous material passing therethrough. The supply station may include means for guiding the farinaceous material.

The working station may includes means for forming a roll of farinaceous material. The working station may include cutting means capable of occupying a position in which a roll of farinaceous material can be at least partially cut. The working station may include means for altering the orientation of a roll of farinaceous material relative to the direction of travel of the roll through the working station. The working station may include means for ensuring that the seam of a roll is arranged to be located in a downwards direction when the material is subsequently located in a container when the supply station is in one or more angular positions.

The apparatus may comprise a moulder panner.

According to another aspect of the present invention, a method of handling farinaceous material comprises supplying farinaceous material from a supply station to a working station after the supply station has been set to one of at least two possible angular positions of the supply station to the working station.

The method may comprise supplying farinaceous material from a supply station to a working station after the supply station has been set to one of three possible angular positions of the supply station to the working station.

The supply station may be moved relative to the working station prior to farinaceous material being supplied from the supply station to the working station either from a direction in line with the intended direction of travel of the farinaceous material through the working station or from a direction transverse thereto, which direction may be generally perpendicular to the intended direction of travel of the farinaceous material through the working station. Alternatively or additionally the supply station may be moved prior to the supply of farinaceous material from the supply station to the working station to one of two transverse directions relative to the intended direction of travel of the farinaceous material through the working station, which two directions may be opposed to each other and each of which may be generally perpendicular to the intended direction of travel of the farinaceous material through the working station.

The method may comprise selecting the angular position of the supply station in dependence upon the orientation of the farinaceous material at a location downstream of the supply station.

When the supply station is moved it may be pivoted. Alternatively or additionally, when the supply station is moved it may be moved translationally.

The supply station may reduce the thickness of a piece of farinaceous material passing therethrough. The supply station may guide the farinaceous material.

The working station may form a roll of farinaceous material as the farinaceous material passes through the working station. The working station may cut the roll of farinaceous material at least partially. The working station may alter the orientation of a roll of farinaceous material relative to the direction of travel of the roll through the working station.

The method of handling farinaceous material may comprise handling the material with a moulder panner.

The present invention also includes a method of handling farinaceous material when using handling apparatus as herein referred to.

The invention may be carried into practice in various ways but one embodiment will now be described by way of example and with reference to the accompanying drawings, in which:

Figure 1 is a schematic plan view of a moulder panner 10 including a supply station 12 in a first position;

Figure 2 is a schematic plan view similar to Figure 1 showing the supply station 12 in a second position;

Figure 3 is a schematic side view of Figure 2;

Figure 4 is a schematic plan view of the mounting 14 of the moulder panner on the handling station 16, and

Figure 5 is a schematic side view of Figure 4.

Referring first to Figure 1, dough pieces enter the supply station 12 from a conveyor (not shown) between a pair of spaced opposed guide rollers 18 which centralise the dough piece before the dough piece passes downwardly and through three sets of opposed rollers 20, 22 and 24. The rollers 20, 22 and 24 flatten the dough piece to form a disc 26 of dough. As the disc 26 exits from the lowermost rollers 24 it co-operates with a deflector 28 which alters the direction of travel of the disc 26 from the direction 30 in which it travels through the rollers to the direction 32 along the handling station without the disc 26 undergoing any pivotal movement. The deflector 28 may be provided with a plurality of openings in its upwardly facing surface through which compressed air may be passed in order that the disc can "float" on the deflector and more readily have its direction of travel altered.

Once the disc 26 has left the deflector 28 its leading edge passes beneath a sheet of chain 34 such that initially the upwardly facing forward edge of the disc catches on the chain above. As a conveyor 36 continues to urge the downwardly facing surface of the disc in the direction 32 the disc 26 is caused to be rolled up by the chain 34 to form a roll 38. The roll 38 then passes to the end of the handling station 16 before leaving that station by rolling downwardly into a tin 40 which is then conveyed away to be baked.

As the rollers 20, 22 and 24 of the supply station 12 squeeze the dough the cell structure of the dough becomes elongate perpendicular to the direction 30 of movement through the rollers. The cell structure remains elongate perpendicular to the direction 30 whilst the dough moves through the handling station 16 into the tin 40 whereby, when the baked loaf is eventually sliced, the cuts are made parallel to the elongate extent of the ovular cell structure in order that the loaf may appear as white as possible as a result of the optical reflective effect of the cut cells which have a ovular cross-section.

In order to move the supply station 12 from the position shown in Figure 1 to that shown in Figure 2, the supply station is first moved transversely (the significance and operation of which is discussed below) and then pivotally until a disc 26 leaving the rollers 20, 22 and 24 will already be travelling in the direction 32 along the handling station.

The disc 26 is then rolled by the chain 34 and the conveyor 36, as previously described in relation to Figure 1. The roll 38 then passes through three knives 42 which make three almost complete cuts through the roll 38 to form four generally equally sized pieces 44.

The roll then abuts a wheel 46 at its central region and a pair of downwardly and inwardly tapering guides 48 at its outer leading edges to cause the ends of the pieces 44 spaced from the wheel 46 and the guides 48 to advance at a faster rate until each piece 44 has turned through 90° and each piece abuts adjacent pieces (with adjacent pieces remaining just connected by dough at 50) before the pieces move into the tin 40.

It can be seen that the elongate cell structure of the dough caused by the compression of the rollers 20, 22 and 24 initially lies perpendicular to the direction 32 but that subsequent turning of the pieces 44 through 90° aligns the elongate axis parallel with the line of the slices made subsequently to the baked loaf thus allowing the advantageous optical effect which enhances the white appearance of the loaf to be achieved.

The knives 42 are able to be raised such that they do not cut a roll, or lowered as required and accordingly the moulder panner is able to produce loaves with the longitudinal axis of the oval cell structure of the dough in an advantageous alignment; regardless of whether the roll is cut or not, by altering the position of the supply station 12. The wheel 46 and the guides 48 can also be brought into or out of engagement with a roll.

In Figure 1 the supply station 12 can be pivoted through 180° such that discs of dough can be brought to the handling station 16 from the opposite direction to the direction 30.

The lateral adjustment of the supply station 12 is used to ensure that discs leaving the supply station, when in the position shown in Figure 1, commence their movement along the handling station in the direction 32 in the centre of the conveyor. The variation in the position of depositing of the disc from the supply station 12 may occur as a result in differences of weight of the discs (if different weights of loaves are to be made) or differences of speed of the discs leaving the supply station.

A variable speed roller (not shown) mounted at the panning end of the machine may be provided and may be controlled such that the outer seam in the roll is always caused to be located on the base of a tin.

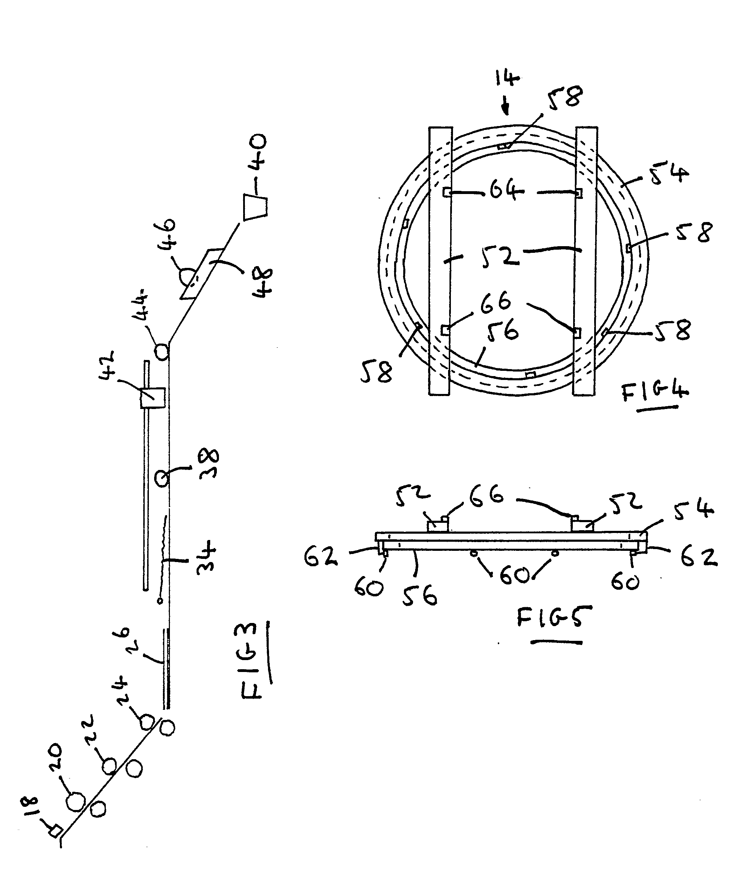

Figures 3 and 4 show the turntable mounting 14 of the supply station 12 on the handling station 16. The supply station 12 is supported by a pair of spaced parallel rails 52 which are in turn fixed to a ring 54. The ring 54 rests on a base ring 56 by a series of rollers 58 which allow the ring 54 to pivot on the ring 56. A series of rollers 60 located on downwardly extending arms 62 of the rings 54 cooperate with the underside of the rings 56 to prevent the supply station 12 from tipping relative to the ring 56.

The supply station 12 is slidably mounted on the rails 52 by wheels (not shown) which are able to ride between a pair of spaced stops 64 and 66 on each of the rails to provide for the transverse adjustment of the supply station 12.

## Claims

1. Farinaceous material handling apparatus including a farinaceous material supply station (12) arranged to supply farinaceous material to a working station (16), the supply station (12) being moveable relative to the working station between at least two angular positions.

2. Apparatus as claimed in Claim 1 in which the supply station is moveable relative to the working station between three angular positions.

3. Apparatus as claimed in Claim 1 or Claim 2 in which the supply station is able to supply farinaceous material from a direction in line with the intended direction of travel (32) of the farinaceous material through the working station or from a direction (30) transverse thereto.

4. Apparatus as claimed in Claim 3 in which the transverse direction is generally perpendicular to the intended direction of travel of the farinaceous material through the working station.

5. Apparatus as claimed in any preceding claim in which the supply station is able to supply farinaceous material to the working station from two different directions, each of which is transverse to the intended direction of travel of the farinaceous material through the working station, the two different directions being opposed to each other.

6. Apparatus as claimed in any preceding claim in which the supply station is pivotally moveable relative to the working station.

7. Apparatus as claimed in any preceding claim which the supply station is translationally moveable relative to the working station.

8. A method of handling farinaceous material comprising supplying farinaceous material from a supply station to a working station after the supply station has been set to one of at least two possible angular positions of the supply stations to the working station.

9. A method as claimed in Claim 8 comprising supplying farinaceous material from a supply station (12) to a working station (14) after the supply station has been set to one of three possible angular positions of the supply station to the working station.

10. Apparatus as claimed in Claim 8 or Claim 9 in which the supply station is moved relative to the working station prior to farinaceous material being supplied from the supply station to the working station, either from a direction in line with the intended direction (32) of travel of the farinaceous material through the working station or from a direction (30) transverse thereto.

11. A method as claimed in any of Claims 8 to 10 in which the supply station is moved prior to the supply of farinaceous material from the supply station to the working station to one of two transverse directions relative to the intended direction of travel of farinaceous material through the working station, the two transverse directions being opposed to each other.

FIG 1

FIG 2

FIG-3

FIG-4

FIG-5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-C- 862 282 (P. BAUR)<br>* Page 3, lines 103-110; figure 1 *<br>--- | 1-11 | A 21 C    3/02<br>A 21 C    9/08 |
| A | US-A-4 150 935 (D. VENZO)<br>* Column 2, lines 47-52; figure 2 *<br>--- | 1-11 | |
| A | FR-A-1 559 650 (G. TWEEDY & CO., LTD.)<br>--- | | |
| A | US-A-2 479 864 (H.C RHODES)<br>--- | | |
| A | GB-A-1 328 790 (K.M.J. BALL)<br>--- | | |
| A | US-A-3 792 948 (J.A. MARTINEZ)<br>------ | | |

TECHNICAL FIELDS
SEARCHED (Int. Cl.5)

A 21 C

The present search report has been drawn up for all claims

| Place of search | Date of completion of the search | Examiner |
|---|---|---|
| THE HAGUE | 07-03-1990 | FRANKS N.M. |